Europäisches Patentamt

European Patent Office

Office européen des brevets

(11) Publication number: **0 468 243 A2**

# EUROPEAN PATENT APPLICATION

(21) Application number: **91111097.1**

(22) Date of filing: **04.07.91**

(51) Int. Cl.⁵: **B60G 9/00**

(30) Priority: **23.07.90 US 556245**

(43) Date of publication of application:
**29.01.92 Bulletin 92/05**

(84) Designated Contracting States:
**DE ES FR GB IT**

(71) Applicant: **EATON CORPORATION**
**Eaton Center**
**Cleveland Ohio 44114(US)**

(72) Inventor: **Adamski, Peter Mariusz**
**6654 Enola Street**
**Kalamazoo, Michigan 49004(US)**

(74) Representative: **Rüger, Rudolf, Dr.-Ing. et al**
**Patentanwälte Dr.-Ing. R. Rüger Dipl.-Ing. H.P.**
**Barthelt Webergasse 3 Postfach 348**
**W-7300 Esslingen/Neckar(DE)**

(54) Axle housing support bracket assembly.

(57) A bracket assembly (100) is provided for securing an axle housing (6) to a vehicle frame or component secured thereto having a support pin (2) extending therefrom. Assembly (100) has a pair of spaced-apart legs (8,12) that straddle pin (2). A bolt (40), having an enlarged threaded section (20) providing an annular shoulder (17), is rotationally advanced through registerable bores in legs (8,12) and pin (2) so as to enable shoulder (17) to enter the space between legs (8,12) to prevent them from being drawn towards each other upon securement of legs (8,12) to support pin (2).

FIG. 2A

## INTRODUCTION

This invention relates generally to a bracket assembly for supporting an axle housing on a vehicle frame and more particularly to a vehicular axle housing support bracket assembly that is adapted to prevent over-stressing of a pair of spaced-apart legs thereof that straddle a support pin extending from the frame to which the support bracket legs are to be secured.

## BACKGROUND OF THE INVENTION

Vehicle axle housings have been characteristically secured directly or indirectly to vehicle frames by means of brackets and the like. The present invention relates to a bracket assembly that includes a support bracket having one end that is secured to the axle housing by welding or other suitable means and an opposite end having a "U" shaped configuration defined by a pair of spaced-apart legs adapted to straddle a support pin to which the legs are to be respectively secured that extends from the frame or from a component secured to the frame.

Heretofore, a standard threaded bolt has been inserted through aligned bores in the support pin and the spaced-apart legs and tightened with a threaded nut to secure the support bracket to the support pin. Such however, may lead to over-stressing of the legs as they are apt to be drawn towards each other and become undesirably deformed upon tightening the bolt.

In view of such, a need has heretofore existed to provide an axle housing support bracket assembly utilizing a support bracket having a pair of spaced-apart legs adapted to straddle and be secured to a support pin extending from a vehicle frame or component secured to a vehicle frame that, in conjunction with a securement bolt, is able to secure the axle housing to the vehicle frame without having over-stressed the bracket legs.

## SUMMARY OF THE INVENTION

Accordingly, it is an object of this invention to provide a bracket assembly for securing an axle housing to a vehicle frame that includes a support bracket and bolt that are respectively adapted to prevent over-stressing of a pair of spaced-apart legs extending from the support bracket for straddling a support pin extending from the vehicle frame or from a component secured to the vehicle frame to which the support bracket legs are to be respectively secured.

## BRIEF DESCRIPTION OF THE DRAWINGS

FIGURE 1 is a schematic top plan view of a section of a vehicle component 4 and a support pin 2 extending transversely therefrom;

FIGURE 2A is a central cross-sectional view through a preferred embodiment of a bracket assembly 100 to be used to secure an axle housing to a vehicle frame component; and

FIGURE 2B is a central cross-sectional view of bracket assembly 100 of FIGURE 1 securing the axle housing to the vehicle frame component.

## DESCRIPTION OF SOME PREFERRED EMBODIMENTS

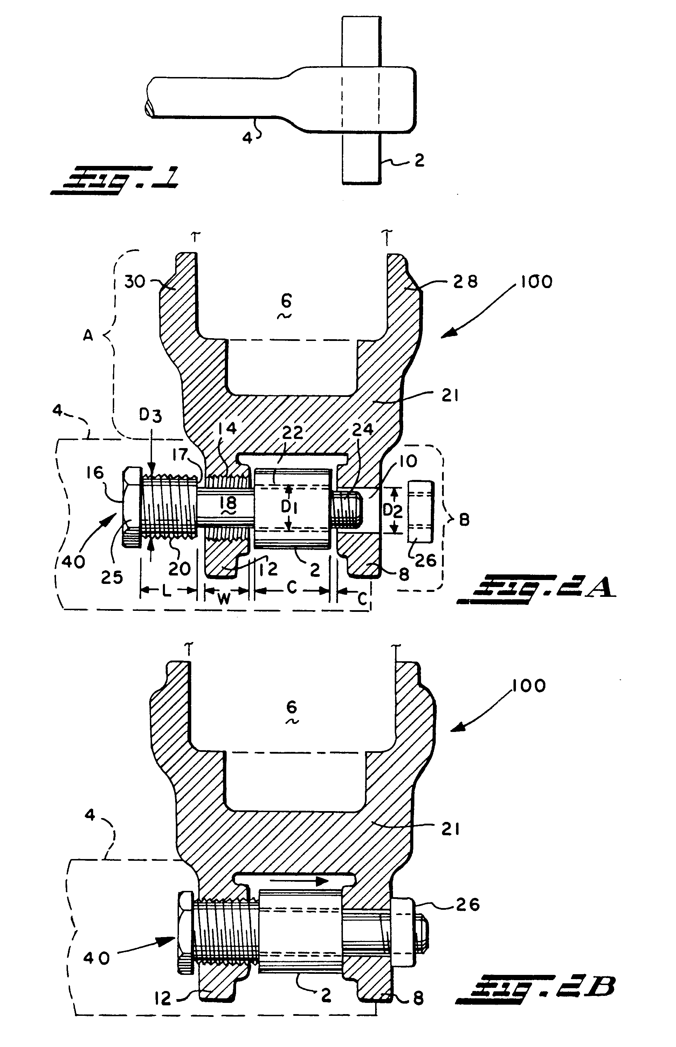

In FIGURE 1, reference numeral 4 indicates a component such as a strut arm that is secured to a frame of a vehicle (not shown) such as by being pivotably connected thereto in association with spring leaf assemblies and the like.

A support pin 2 extends from component 4. In many instances pin 2 extends through an opening through component 4 and thus extends generally transversely away from opposite sides thereof.

The support bracket assembly of the invention hereinafter described is commonly used on both sides of component 4 so that two are used at the end of component 4 which may have a counterpart on the opposite side of the vehicle frame with respect to a corresponding component that extends in an opposite direction (toward the viewer's left) to the direction shown in FIGURE 1. In such instances, four of the support bracket assemblies (two on each side) would be used to secure the axle housing to the vehicle component. Although not described herein, it is to be understood that the present invention includes embodiments where two of the support brackets are joined in a suitable manner so as to bridge across the component and installed as a single unit for securement to the support pin 2 extending from opposite sides of the component.

Bracket assembly 100 of FIGURE 2B includes a support bracket 21 and a bolt member 40. Support bracket 21 has a first portion generally referenced by the letter "A" that is adapted to enable securement of bracket 21 to an axle housing 6 and a second portion generally referenced by the letter "B" that is adapted to enable bracket 21 to be secured to support pin 2 shown in FIGURES 1, 2A, and 2B.

Portion "B" of bracket 21 has an inverted "U" configuration defined by first leg 8 and second leg 12 that extend therefrom and are spaced-apart from each other sufficiently to enable pin 2 to be straddled therebetween preferably with a predetermined clearance such as designated by the letters "c" in FIGURE 2A. In practice, it is desirable to have clearance "C" (two times c) as large as possible so that pin 2 can drop from between legs 8 and 12 when bolt 40 is removed from bore 22 which even further aggravates the potential for undesirable stress on legs 8 and 12 when a standard bolt is used.

Portion "A" of bracket 21 preferably has a "U" shaped configuration defined by a pair of spaced-apart arms 28 and 30 that are spaced-apart from each other sufficiently to enable them to straddle axle housing 6 and be respectively secured thereto such as by welding or by other suitable means of securing the two together.

Pin 2 has a first bore 22 extending therethrough having a diameter "$D_1$". First leg 8 has a second bore 10 therethrough having a diameter "$D_2$". Second leg 12 has a threaded third bore 14 therethrough having a diameter "$D_3$" shown with respect to section 20 of bolt member 40 hereinafter described.

Bores 10, 14 and 22 are registerable with each other when pin 2 is straddled between legs 8 and 12. Diameter $D_1$ of first bore 22 and diameter $D_2$ of second bore 10 preferably substantially correspond to each other and are adapted to enable shank 18 of bolt 40 to be received respectively therethrough.

Third bore 14 is a threaded bore that is larger in diameter than bores 10 and 22. It has a diameter $D_3$ corresponding substantially to diameter $D_3$ of section 20 of bolt member 40.

Bolt member 40 preferably has a head or suitable driving means portion 16 and an elongate shank portion 18 that is able to be received through bores 10 and 22 as previously described. The end of shank portion 18 is threaded for at least the axial distance from the end thereof sufficient to enable it to threadingly engage threads in bore 10 (not shown) if such is desired or preferably for an axial distance sufficient to threadingly engage the threads of threaded nut 26 sufficiently to secure bolt 40 to leg 8 after shank portion 18 has been received through bore 10.

Threaded section 20 of bolt 40 is disposed intermediate head 26 and shank portion 18 and, due to its diameter $D_2$ being larger than diameters 10 and 22, defines an annular shoulder 17 facing away from head 16 and towards shank portion 18.

Section 20 of bolt 40 has an axial length "L" that exceeds the width "W" of second leg 12 plus clearance "C" by a sufficient amount so that annular shoulder 17 is able to engage the sides of pin 22 facing theretowards when it enters the space between legs 8 and 12.

As can be seen from FIGURE 2A, an ordinary standard bolt not having an enlarged threaded section 20 to secure bracket 100 to pin 2 could cause legs 8 and 12 to bend inwardly towards each other until they respectively engaged opposite sides of pin 22 which may create undesirable stress in the legs at the point of bending.

Such is prevented by the use of bolt 40 which, in operation, is assembled to bracket 100 by inserting shank portion 18 through bores 12, 22 and 10 when they are in substantial registration with each other. Head 16 of bolt 40 is provided with suitable means for rotating bolt 40 such as by having at least one pair of opposed flats 25 that are engaged by a wrench or other suitable tool. Bolt 40 is then rotationally advanced through bores 14, 22 and 10 due to the threaded engagement between the threads of bore 14 and those of section 20 of bolt 40 since the axial length "L" of section 20 exceeds width "W" of leg 12, annular shoulder 17 enters the space between legs 8 and 12 as bolt 40 is rotationally advanced through bores 14, 22 and 10. Shoulder 17 engages the side of pin 2 facing theretowards and urges pin 22 to the right to engage the side of leg 8 facing theretowards or, alternatively urges portion B towards the viewer's left to effect the same result as shown in FIGURE 2B.

The result is that legs 8 and 12 are prevented from being drawn towards each other as legs 8 and 12 are secured to pin 2.

Bracket 21, bolt 40 and nut 26 (if used above as in conjunction with threads in bore 10 as previously described) may be made from any material or combination of materials suitable for such application.

When both bores 14 and 10 are threaded, they and the threaded ends of shank portion 18 have corresponding same direction threads so that bolt 40 can be rotationally advanced through bores 14, 22 and 10. When only bore 14 is threaded, and nut 26 is used to secure bolt 40 to leg 8, the threads of section 20 and the threaded end of shank portion 18 of bolt 40 may be in the same or opposite directions.

**Claims**

1. A bracket assembly (100) for securing an axle housing (6) to a vehicle frame or to a component secured to the vehicle frame having a support pin (2) extending therefrom having a first bore (22) of predetermined diameter extending therethrough, said assembly comprising:

   a support bracket (21), said bracket having a first portion (A) adapted to be secured to the axle housing and a second portion (B) adapted to secure the bracket to the support pin (2) having an inverted "U" configuration defined by first and second legs (8,12) that are spaced-apart from each other for a distance sufficient to provide space for straddling the support pin (2) therebetween;

said first bracket leg (8) having a second bore (10) extending therethrough that is registerable with the first bore (10) and has a diameter corresponding substantially thereto;

said second bracket leg (12) having a third threaded bore (14) extending therethrough that is registerable with the first bore (22) and has a diameter that is larger than the first bore diameter;

a bolt (40) having a threaded section (20) disposed intermediate a driving means portion and an elongate shank portion;

said shank portion adapted to extend through the first and second bores and having means for securing the bolt to the first leg;

said threaded section (22) having an axial length (6) that exceeds the width of the second leg (12) by a predetermined amount and having a diameter enabling threaded engagement between the threads thereof and the third bore threads and defining an annular (17) shoulder facing towards the shank portion at the juncture therebetween; and

said assembly operable such that rotational advancement of the threaded section (20) through the third bore (14) rotationally advances the shank portion through the first and second bores and causes the shoulder (17) to enter the space between the first and second legs and abut against the pin (2) and urge the pin against the first leg (8) to prevent the first and second legs from being drawn towards each other upon securement of the bracket to the support pin.

2. The assembly (100) of claim 1 wherein the bracket first portion (A) is adapted for securement to the axle housing (6) by having a "U" shaped configuration defined by a pair of arms (28,30) that extend away from the bracket second portion (B) and are spaced-apart from each other for a distance sufficient to enable the arms to straddle the axle housing (6) therebetween and are respectively adapted for securement thereto.

3. The assembly (100) of claim 1 wherein the driving means portion is a head (16) having at least one pair of opposed flats (25).

4. The assembly (100) of claim 1 wherein the second bore (10) is a threaded bore and the means for securing the bolt shank portion to the first leg (8) is provided by the bolt shank portion having threads adapted to threadingly engage the second bore threads.

5. The assembly (100) of claim 1 or 4 including a threaded nut (26) and the means for securing the bolt shank portion to the first leg (8) is provided by said shank portion including an exposed threaded portion extending beyond the first leg (8) and adapted for threaded engagement with the nut.

FIG. 1

FIG. 2A

FIG. 2B